# EUROPÄISCHE PATENTSCHRIFT

(11) **EP 3 634 897 B1**
(45) Veröffentlichungstag und Bekanntmachung des Hinweises auf die Patenterteilung: **12.01.2022**
(21) Anmeldenummer: 18727031.9
(22) Anmeldetag: 04.06.2018
(51) Int. Cl.: B66B 1/46, B66B 5/00

(54) **AUFZUGSSYSTEM MIT BESUCHERBETRIEBSMODUS**
ELEVATOR SYSTEM HAVING GUEST OPERATION MODE
SYSTÈME D'ASCENSEUR AYANT UN MODE DE FONCTIONNEMENT POUR VISITEUR

(30) Priorität: 07.06.2017 EP 17174705
(43) Veröffentlichungstag der Anmeldung: 15.04.2020
(73) Patentinhaber: Inventio AG, 6052 Hergiswil (CH)
(72) Erfinder: BEGLE, Guntram, 6353 Weggis (CH)
(86) Internationale Anmeldenummer: PCT/EP2018/064580
(87) Internationale Veröffentlichungsnummer: WO 2018/224426

(56) Entgegenhaltungen:
- WO-A1-2009/116129
- CN-A- 105 752 772
- US-A- 6 011 839
- US-A1- 2015 114 763
- US-A1- 2015 314 986

## Beschreibung

Die hier beschriebene Technologie betrifft allgemein ein Steuerungsverfahren für ein Aufzugssystem. Ausführungsbeispiele der Technologie betreffen neben dem Steuerungsverfahren das Aufzugssystem.

In einem Gebäude dient ein Aufzugssystem bekanntermassen dazu, um eine Person von einem Stockwerk auf ein anderes Stockwerk zu transportieren. Die Person gibt dazu beispielsweise auf einem Einsteigestockwerk an einem Rufeingabeterminal einen Ruf ein und eine den Ruf bedienende Aufzugskabine transportiert die Person auf ein gewünschtes Zielstockwerk. Damit aus Gründen der Gebäudesicherheit nur berechtigte Personen einen Ruf eingeben können, kann das Rufeingabeterminal ein Lesegerät umfassen oder damit verbunden sein, um einen Berechtigungsnachweis (z.B. Chipkarte, Magnetstreifenkarte, Code/PIN) einer Person zu erfassen.

Um die Gebäudesicherheit zu erhöhen, ist es auch bekannt, den Zugang zum Gebäude zu kontrollieren. Für diesen Zweck sind Gegensprechanlagen mit oder ohne Bildübertragung und Türen mit einfachen mechanischen oder elektromechanischen Schlössern bekannt. Eine Audio/Video-Einrichtung der Gegensprechanlage an einem Gebäudeeingang ist dabei durch Kabelverbindungen mit einer Vielzahl von Audio/Video-Einrichtungen in den einzelnen Wohn- und/oder Geschäftseinheiten eines Gebäudes verbunden.

Neben solchen Gegensprechanlagen sind auch komplexere Zugangskontrollsysteme bekannt. US 9,077,716 beschreibt beispielsweise ein Zugangskontrollsystem, in dem ein mobiles elektronisches Gerät mit einem elektronischen Türschloss mittels einer Bluetooth oder WLAN Funkverbindung und mit einem Webserver mittels einer WAN (Wide Area Network) Funkverbindung kommuniziert, um das elektronische Schloss mittels eines vom Webserver generierten Codemusters zu öffnen. WO 2010/112586 A1 beschreibt ein Zugangskontrollsystem, bei dem ein von einem Nutzer mitgeführtes Mobiltelefon einen Identifikationscode an einen Zugangsknoten sendet. Falls der Identifikationscode als gültig erkannt wird, sendet der Zugangsknoten einen Zugangscode an das Mobiltelefon, das den Zugangsknoten auf einer Anzeige dargestellt. Hält der Nutzer das Mobiltelefon an eine Kamera, so dass diese den dargestellten Zugangscode erfassen kann, überprüft das Zugangskontrollsystem, ob der erfasste Zugangscode gültig ist. Ist er gültig, wird dem Nutzer der Zugang gewährt.

US 2015/314986 A1 offenbart ein Zugangskontrollsystem mit einem elektronischen Türschloss, das mehrere Berührungsfelder aufweist. Mittels dieser Berührungsfelder kann ein Benutzer einen von mehreren festgelegten Befehlen eingeben, in dem er mit einem Finger entsprechend einer festgelegten Geste über die Berührungsfelder gleitet. Mit einem dieser festgelegten Befehle kann beispielsweise eine Tür für einen Besucher geöffnet oder ein Aufzug für den Besucher gerufen werden.

US 6 011 839 A offenbart eine Aufzugsanlage, bei der auf den Stockwerken vorgesehene Rufeingabeeinrichtungen eine erste und eine zweite Eingabetaste aufweisen. Bei der Abarbeitung eines mit der ersten Eingabetaste eingegebenen Rufes wird zuerst ein bestimmtes Zielstockwerk und danach das Eingabestockwerk bedient, wohingegen bei der Abarbeitung eines mit der zweiten Eingabetaste eingegebenen Rufes zuerst das Eingabestockwerk und danach das bestimmte Zielstockwerk bedient wird. Ein Hausbewohner kann einem Besucher beim Öffnen der Haustür gleich einen Aufzug bereitstellen, der ihn genau zum richtigen Stockwerk bringt, ohne dass von einem der Beteiligten zusätzliche Tasten für die Aufzugsbenutzung gedrückt werden müssen.

Diese Zugangskontrollsysteme bieten eine gewisse Benutzerfreundlichkeit, weil die Nutzer keine Berechtigungsausweise oder herkömmliche Schlüssel bei sich tragen und sich keinen Zugangscode merken müssen. Nachdem der Person Zugang gewährt wurde, ist die Person jedoch auf sich alleine gestellt und kann sich unter Umständen im Gebäude, auch unter Nutzung des Aufzugsystems, frei bewegen. Handelt es sich bei der Person um eine Person, die im Gebäude wohnt oder arbeitet, stellt dies in der Regel kein Problem dar. Handelt es sich bei der Person jedoch um eine Person, die erstmalig das Gebäude betritt, beispielsweise als Besucher, kann es aus Sicherheitsgründen nicht wünschenswert sein, dass sich der Besucher frei bewegen kann. Aus Sicherheitsgründen ist es ausserdem nicht gewünscht, dass eine evtl. unberechtigte Person Zugang zum Gebäude erhält, indem sie sich einer berechtigten Person (evtl. unbemerkt) anschliesst und durch eine durch (oder für) die berechtigte Person geöffnete Tür geht. Es besteht daher Bedarf an einer Technologie, die die Sicherheitsanforderungen besser erfüllt, kostengünstig implementiert werden kann und dabei aber benutzerfreundlich bleibt.

Ein Aspekt einer solchen Technologie betrifft ein Verfahren zum Betreiben eines Systems mit einem Aufzugssystem und einer Schnittstelleneinrichtung für eine Kommunikation über ein Kommunikationsnetzwerk. Das Aufzugssystem umfasst eine Aufzugssteuerung, eine Aufzugskabine und eine Antriebseinheit, die bei einer Ansteuerung durch die Aufzugssteuerung die Aufzugskabine zwischen Stockwerken des Gebäudes verfährt. In der Aufzugskabine ist eine Kamera angeordnet, um eine Kameraaufnahme aus einem Innenraum der Aufzugskabine zu erzeugen.

Gemäss dem Verfahren wird ein erstes Eingangssignal durch die Schnittstelleneinrichtung empfangen, wobei das erste Eingangssignal anzeigt, dass ein Gastgeber mittels einer Eingabe an einer Kommunikationseinrichtung ein Verfahren der Aufzugskabine auf ein erstes festgelegtes Stockwerk, auf dem ein Besucher die Aufzugskabine besteigen möchte, veranlasst. Es wird ein erstes Aufzugssteuersignal durch die Schnittstelleneinrichten basierend auf dem ersten Eingangssignal erzeugt. Das erste Aufzugssteuersignal wird durch die Schnittstelleneinrichtung zur Aufzugssteuerung gesendet, um das Verfahren der Aufzugskabine auf das erste festgelegte Stockwerk zu veranlassen. Es wird eine Kameraaufnahme aus dem Innenraum der Aufzugskabine durch die Schnittstelleneinrichtung empfangen, wenn der Besucher die Aufzugskabine bestiegen hat. Die Kameraaufnahme wird durch die Schnittstelleneinrichtung über das Kommunikationsnetzwerk zur Kommunikationseinrichtung gesendet. Es wird ein zweites Eingangssignal durch die Schnittstelleneinrichtung über das Kommunikationsnetzwerk empfangen, wobei das zweite Eingangssignal dadurch erzeugt wird, dass der Gastgeber mittels einer Eingabe an der Kommunikationseinrichtung ein Verfahren der Aufzugskabine auf ein zweites festgelegtes Stockwerk, auf dem der Besucher aus der Aufzugskabine aussteigen möchte, veranlasst. Durch die Schnittstelleneinrichten wird ein zweites Aufzugssteuersignal basierend auf dem zweiten Eingangssignal erzeugt. Das zweite Aufzugssteuersignal wird durch die Schnittstelleneinrichtung zur Aufzugssteuerung gesendet, um das Verfahren der Aufzugskabine auf das zweite festgelegte Stockwerk zu veranlassen.

Ein weiterer Aspekt der Technologie betrifft ein System für ein Gebäude mit mehreren Stockwerken. Das System umfasst ein Aufzugssystem mit einer Aufzugssteuerung, einer Aufzugskabine und einer Antriebseinheit, die bei einer Ansteuerung durch die Aufzugssteuerung die Aufzugskabine zwischen den Stockwerken des Gebäudes verfährt. In der Aufzugskabine ist eine Kamera angeordnet, um eine Kameraaufnahme eines Innenraums der Aufzugskabine zu erzeugen. Das System umfasst ausserdem eine Schnittstelleneinrichtung, die kommunikativ an die Aufzugssteuerung und die Kamera gekoppelt ist, wobei die Schnittstelleneinrichtung eine Verarbeitungseinrichtung und eine Sende- und Empfangseinrichtung hat, um über ein Kommunikationsnetz mit einer Kommunikationseinrichtung eines Gastgebers und einem mobilen Gerät eines Besuchers zu kommunizieren.

Die Verarbeitungseinrichtung führt im Betrieb ein Verfahren aus, gemäss dem ein erstes Eingangssignal durch die Schnittstelleneinrichtung empfangen wird, wobei das erste Eingangssignal anzeigt, dass ein Gastgeber mittels einer Eingabe an einer Kommunikationseinrichtung ein Verfahren der Aufzugskabine auf ein erstes festgelegtes Stockwerk, auf dem ein Besucher die Aufzugskabine besteigen möchte, veranlasst. Es wird ein erstes Aufzugssteuersignal durch die Schnittstelleneinrichten basierend auf dem ersten Eingangssignal erzeugt. Das erste Aufzugssteuersignal wird durch die Schnittstelleneinrichtung zur Aufzugssteuerung gesendet, um das Verfahren der Aufzugskabine auf das erste festgelegte Stockwerk zu veranlassen. Es wird eine Kameraaufnahme aus dem Innenraum der Aufzugskabine durch die Schnittstelleneinrichtung empfangen, wenn der Besucher die Aufzugskabine bestiegen hat. Die Kameraaufnahme wird durch die Schnittstelleneinrichtung über das Kommunikationsnetzwerk zur Kommunikationseinrichtung gesendet. Es wird ein zweites Eingangssignal durch die Schnittstelleneinrichtung über das Kommunikationsnetzwerk empfangen, wobei das zweite Eingangssignal dadurch erzeugt wird, dass der Gastgeber mittels einer Eingabe an der Kommunikationseinrichtung ein Verfahren der Aufzugskabine auf ein zweites festgelegtes Stockwerk, auf dem der Besucher aus der Aufzugskabine aussteigen möchte, veranlasst. Durch die Schnittstelleneinrichten wird ein zweites Aufzugssteuersignal basierend auf dem zweiten Eingangssignal erzeugt. Das zweite Aufzugssteuersignal wird durch die Schnittstelleneinrichtung zur Aufzugssteuerung gesendet, um das Verfahren der Aufzugskabine auf das zweite festgelegte Stockwerk zu veranlassen.

Mit Hilfe der hier beschriebenen Technologie kann die Sicherheit in einem Gebäude auf benutzerfreundliche und kostengünstige Weise erhöht werden. Bezogen auf einzelne Personen im Gebäude, beispielsweise eines Gastgebers, der einen Besucher erwartet, wird das individuelle Sicherheitsgefühl verbessert. Die hier beschriebene Technologie ermöglicht dies u.a. dadurch, dass der Gastgeber in eingeschränktem Umfang für einen begrenzten Zeitraum die Kontrolle über das Aufzugssystem im Gebäude erhält. Der Gastgeber kann z.B. einen Aufzug (bzw. eine Aufzugskabine) für eine Fahrt des Besuchers reservieren und den Besucher auf dem Weg zum Gastgeber virtuell begleiten. Die virtuelle Begleitung erfolgt z.B. dadurch, dass der Gastgeber von seinem momentanen Standort (z.B. Büro oder Wohnung) aus eine Kameraaufnahme aus dem Innern der Aufzugskabine beobachten kann und nur dann die Aufzugsfahrt auf das Zielstockwerk veranlassen kann, wenn sich nur der Besucher in der Kabine befindet. Der Gastgeber weiss somit, wer auf dem Zielstockwerk ankommt.

Die Sicherheit und das individuelle Sicherheitsgefühl werden auch dadurch unterstützt, dass die hier beschriebene Technologie gemäss einem Ausführungsbeispiel dem Gastgeber Kontrolle über den Gebäudeeingang ermöglicht. Der Gastgeber kann den Gebäudeeingang freigeben, wenn er die Identität des Besuchers bestätigen konnte, beispielsweise indem er mit dem Besucher spricht und/oder eine Kameraaufnahme des Besuchers betrachtet.

Sowohl bei der Kontrolle des Aufzugssystems als auch bei der Kontrolle des Gebäudeeingangs kann der Gastgeber erkennen, wer die Aufzugskabine besteigt bzw. durch den Gebäudeeingang geht. Dadurch kann erkannt werden, wenn sich eine evtl. unberechtigte Person dem Besucher (evtl. unbemerkt) anschliesst. Erkennt der Gastgeber dies, kann er je nach Situation einen Sicherheitsdienst benachrichtigen, den Gebäudeeingang nicht freigeben und/oder die Aufzugsfahrt des Besuchers unterbinden oder verzögern (z.B. bis diese Person die Aufzugskabine wieder verlassen hat).

Ein Vorteil der hier beschriebenen Technologie ist, dass sie kostengünstig implementiert werden kann. Dies ist insbesondere dann der Fall, wenn sowohl der Gastgeber als auch der Gastgeber ein Smartphone verwenden, das sie für andere Zwecke bereits bei sich tragen und das mit einer für die Technologie vorgesehenen Anwendungssoftware ausgestattet ist. Der Besucher kann das Smartphone z.B. verwenden, um den Gastgeber zu kontaktieren, wenn er Zugang zum Gebäude wünscht. Der Gastgeber kann das Smartphone verwenden, um die Identität des Besuchers zu überprüfen, den Gebäudeeingang freizugeben, einen Aufzug für den Besucher zu reservieren und die Aufzugsfahrt des Besuchers auf das Zielstockwerk zu veranlassen.

Die gemäss der Technologie verwendete Schnittstelleneinrichtung kann flexibel und ohne grösseren Aufwand im Gebäude mit dem Aufzugssystem gekoppelt werden, beispielsweise kann sie im Aufzugsschacht oder in einem Maschinenraum angeordnet werden. In einem Ausführungsbeispiel ist die Sende- und Empfangseinrichtung der Schnittstelleneinrichtung für eine Kommunikation per Funk ausgestattet, wodurch der Installationsaufwand reduziert wird.

Die Schnittstelleneinrichtung dient allgemein zur Übertragung von Daten, Sprache (bzw. Sprachdaten) und/oder Bilddaten; dementsprechend ist sie für mindestens einen dieser Zwecke ausgestaltet. Die genannte Übertragung kann gemäss einer oder mehrerer Technologien erfolgen, beispielsweise der VoIP (voice over internet protocol) Technologie, einer Mobilfunktechnologie (z.B. 4G/LTE (long term evolution)) oder einer kabelgebundenen Technologie (z.B. der Ethernet Technologie).

Flexibilität besteht auch hinsichtlich der Kommunikationseinrichtung des Gastgebers. In einem Ausführungsbeispiel ist die Kommunikationseinrichtung des Gastgebers ein mobiles Gerät (z.B. ein Smartphone), das über eine Funkverbindung mit der Schnittstelleneinrichtung kommuniziert. Dadurch entfällt eine Verkabelung mit der Schnittstelleneinrichtung. In einem anderen Ausführungsbeispiel kann die Kommunikationseinrichtung des Gastgebers an eine Gebäudeinstallation gekoppelt ist, wobei die Gebäudeinstallation mit der Schnittstelleneinrichtung verbunden ist.

Die hier beschriebene Technologie ermöglicht auch Flexibilität hinsichtlich der Verteilung der Funktionalitäten. So kann beispielsweise die Schnittstelleneinrichtung so konfiguriert sein, dass in ihr die Softwareanwendung gespeichert ist. Alternativ dazu kann die Softwareanwendung oder Programmteile davon von einer Infrastruktur für Cloud Computing zur Verfügung gestellt werden. Die Schnittstelleneinrichtung greift dann bei Bedarf auf diese Infrastruktur zu, um die Softwareanwendung auszuführen. In einem Ausführungsbeispiel umfasst das Kommunikationsnetzwerk die Infrastruktur für Cloud Computing.

In einem Ausführungsbeispiel wird ein drittes Eingangssignal durch die Schnittstelleneinrichtung über das Kommunikationsnetzwerk empfangen, wobei das dritte Eingangssignal dadurch erzeugt wird, dass der Gastgeber mittels einer Eingabe an der Kommunikationseinrichtung eine Identität des Besuchers bestätigt. Basierend auf dem dritten Eingangssignal wird ein Türsteuersignal erzeugt, das durch die Schnittstelleneinrichtung zu einer Gebäudesteuerung gesendet wird, um eine Freigabe eines Gebäudeeingangs zu veranlassen. Dadurch wird die Gebäudesicherheit erhöht, weil der Gastgeber den Zugang zum Gebäude kontrollieren kann.

In einem Ausführungsbeispiel wird durch die Schnittstelleneinrichtung eine Rückmeldung über das Kommunikationsnetzwerk zur Kommunikationseinrichtung gesendet, um den Gastgeber darüber zu informieren, dass der Gebäudeeingang geöffnet ist. Information darüber, dass ein Besucher nun Zugang zum Gebäude hat, kann das Sicherheitsgefühl des Gastgebers verbessern.

In einem Ausführungsbeispiel erfolgt das Senden der Kameraaufnahme zur Kommunikationseinrichtung, solange sich der Besucher in der Aufzugskabine befindet.

Dadurch kann die Fahrt des Besuchers bis zum Zielstockwerk überwacht werden und der Gastgeber ist kontinuierlich darüber informiert, wo sich der Besucher befindet.

In einem Ausführungsbeispiel wird ein von der Aufzugssteuerung erzeugtes Statussignal durch die Schnittstelleneinrichtung empfangen. Das Statussignal zeigt an, dass die Aufzugskabine das zweite festgelegte Stockwerk (Zielstockwerk) erreicht hat. Das Statussignal wird zur Kommunikationseinrichtung gesendet, um den Gastgeber zu informieren, dass der Besucher auf dem Zielstockwerk angekommen ist. Auch diese Information kann das Sicherheitsgefühl des Gastgebers verbessern; ausserdem kann der Gastgeber daraufhin den Besucher in Empfang nehmen.

In einem Ausführungsbeispiel versetzt das erste Aufzugssteuersignal das Aufzugsystem von einem Normalbetriebsmodus in einen Besucherbetriebsmodus. In diesem Besucherbetriebsmodus wird eine Aufzugskabine für eine Fahrt des Besuchers reserviert, damit der Besucher möglichst ohne grosse Verzögerung zum Gastgeber gelangen kann. Wenn die Aufzugskabine das zweite festgelegte Stockwerk erreicht hat, wird das Aufzugsystem vom Besucherbetriebsmodus in den Normalbetriebsmodus zurückgesetzt. Damit wird erreicht, dass das Aufzugsystem so schnell wie möglich wieder in den Normalbetriebsmodus zurückgesetzt wird, um Fahrten von andere Personen nicht zu verzögern.

In einem Ausführungsbeispiel wird eine von der Kommunikationseinrichtung des Gastgebers erzeugte Kameraaufnahme durch die Schnittstelleneinrichtung zu einem mobilen Gerät des Besuchers gesendet. Die Kameraaufnahme zeigt den Gastgeber. Damit kann sich auch der Besucher vergewissern, dass der Gastgeber auch die Person ist, die er besuchen möchte.

Die Gebäudesicherheit und das Sicherheitsgefühl des Gastgebers können verbessert werden, indem dem Gastgeber ermöglicht wird, die Aufzugstür zu kontrollieren. In einem Ausführungsbeispiel wird dazu ein viertes Eingangssignal durch die Schnittstelleneinrichtung über das Kommunikationsnetzwerk empfangen, wobei das vierte Eingangssignal dadurch erzeugt wird, dass der Gastgeber mittels einer Eingabe an der Kommunikationseinrichtung ein Öffnen oder Schliessen einer Aufzugstür veranlasst. Ein drittes Aufzugssteuersignal wird durch die Schnittstelleneinrichtung basierend auf dem vierten Eingangssignal erzeugt und zur Aufzugssteuerung gesendet, wobei das dritte Aufzugssteuersignal ein Öffnen oder Schliessen der Aufzugstür bewirkt.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung einer beispielhaften Situation auf einem ausschnittsweise gezeigten Gebäudestockwerk, das von einem Aufzugsystem bedient wird;
- Fig. 2: eine schematische Darstellung eines Teils des Gebäudes in einer Seitenansicht, wobei mehrere Stockwerke und Komponenten des Aufzugsystems gezeigt sind;
- Fig. 3: eine beispielhafte Benutzeroberfläche auf einer Anzeige einer Kommunikationseinrichtung eines Gastgebers;
- Fig. 4: eine schematische Darstellung von Interaktionen einer Schnittstelleneinrichtung, der Kommunikationseinrichtung des Gastgebers und eines mobilen Geräts eines Besuchers über ein Netzwerk; und
- Fig. 5: ein Ablaufdiagram eines Ausführungsbeispiels eines Verfahrens zum Betreiben des Aufzugsystems einen Besucherbetriebsmodus.

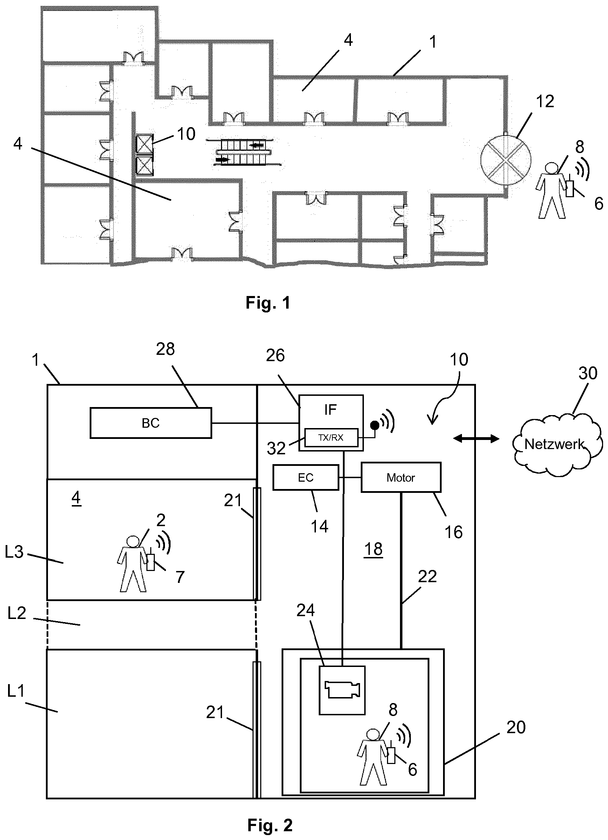

Fig. 1 ist eine schematische Darstellung einer beispielhaften Situation auf einem ausschnittsweise gezeigten Stockwerk eines Gebäudes 1, das durch einen Gebäudeeingang 12 betreten werden kann und ein Aufzugssystem 10 und eine Vielzahl von Räumen 4 aufweist. Der Gebäudeeingang 12 kann z. B. in eine Eingangshalle münden. Die Räume 4 können z.B. Wohnungen, Hallen und/oder Büros oder andere Geschäftsräume sein. In der in Fig. 1 gezeigten Situation befindet sich eine Person 8 ausserhalb des Gebäudes 1 in der Nähe des Gebäudeeingangs 12 und wünscht, im Gebäude 1 eine Person 2 (Fig. 2) zu besuchen. In einer anderen Situation kann sich die Person 8 entfernt vom Gebäude 1 befinden (z.B. in einem Fahrzeug oder einem anderen Gebäude). Unabhängig davon, ob sich die Person 8 in der Nähe oder fern des Gebäudes 1 befindet, ist die Person 8 ausserhalb des Gebäudes 1 im Folgenden als Besucher 8 bezeichnet. Unter dem Begriff "Gebäude" sind in dieser Beschreibung z. B. Wohngebäude, Geschäftsgebäude, Sportarenen, Einkaufszentren, aber auch Schiffe zu verstehen.

Zum Verständnis der vertikalen Situation im Gebäude 1 zeigt Fig. 2 in einer Seitenansicht einen Teil des in Fig. 1 gezeigten Gebäudes 1 mit einem Ausführungsbeispiel eines Gebäudesteuerungssystems, das ein Aufzugsystem 10 umfasst. Das Gebäude 1 hat mehrere Stockwerke L1, L2, L3, auf denen sich jeweils eine Vielzahl von Räumen 4 befindet. Der Raum 4 kann z.B. ein Bereich einer Wohnung oder ein Bereich von Büro- oder Geschäftsräumen des Gastgebers 2 sein. In einem der Räume 4 auf dem Stockwerk L3 befindet sich in Fig. 2 die Person 2, die den Besucher 8 erwartet. Die Person 2 im Raum 4 ist im Folgenden als Gastgeber 2 bezeichnet. Der Fachmann erkennt, dass die hier beschriebene Technologie nicht auf ein Gastgeber-Besucher Scenario beschränkt ist. Die Bezeichnungen "Gastgeber" und "Besucher" werden verwendet, um die involvierten Personen leichter unterscheiden zu können.

Wie in Fig. 1 und Fig. 2 beispielhaft angedeutet, trägt der Besucher 8 für Kommunikationszwecke ein mobiles elektronisches Gerät 6 (im Folgenden auch als mobiles Gerät 6 bezeichnet) bei sich. Ein solches mobiles Gerät 6 hat eine Kamera (insbesondere eine Digitalkamera) und eine dazugehörige anwendungsspezifische Software (App). Die Kamera des mobilen Geräts 6 dient zur Aufnahme von einzelnen Bildern und eines Videos. Eine Kameraaufnahme liegt beispielsweise in einem JPEG Format, einem MPEG Format oder ähnlichen Formaten vor.

In den hier beschriebenen Ausführungsbeispielen ist das mobile Gerät 6 ein Smartphone. Ein Smartphone ist ein Mobiltelefon, das wesentlich umfangreichere Computer-Funktionalitäten und -konnektivität als ein Mobiltelefon, das nur zur Sprach- und/oder Textkommunikation dient, zur Verfügung stellt. Alle Funktionen können typischerweise mittels eines berührungsempfindlichen Bildschirmes gesteuert werden. In anderen Ausführungsbeispielen kann das mobile Gerät 6 auch ein Tablet PC, ein Notebook/Laptop Computer o.ä. sein, wobei diese Geräte neben einer Kamera mindestens ein Funkmodul aufweisen.

Fig. 2 zeigt ausserdem, dass der Gastgeber 2 für Kommunikationszwecke eine Kommunikationseinrichtung 7 hat. Diese Kommunikationseinrichtung 7 kann ebenfalls ein mobiles elektronisches Gerät (Smartphone, Tablet PC, Notebook/Laptop Computer o.ä.) sein, das der Gastgeber 2, wie in Fig. 2 gezeigt, bei sich tragen kann. Alternativ dazu kann die Kommunikationseinrichtung 7 an einem festgelegten Ort in der Wohnung oder den Büro- oder Geschäftsräumen des Gastgebers 2 angeordnet sein. Dort kann es beispielsweise mit einem gebäudeinternen Kommunikationsnetz gekoppelt sein. Der Fachmann erkennt, dass auch eine derart angeordnete Kommunikationseinrichtung 7 - je nach Ausgestaltung - Funktionalitäten aufweisen kann, die denen eines Smartphones, eines Tablet PCs und/oder eines Notebooks/Laptop Computers entsprechen. Diese Funktionalitäten können auch die einer Gegensprechanlage, mit oder ohne Videofunktion, umfassen.

Das in Fig. 2 gezeigte Aufzugssystem 10 umfasst im gezeigten Ausführungsbeispiel eine Aufzugssteuerung (EC) 14, eine Aufzugskabine 20, in der eine Kamera 24 angeordnet ist, und eine Antriebseinheit (Motor) 16. Der Fachmann erkennt, dass das Aufzugssystem 10 weitere Komponenten umfassen kann (zum Beispiel Bedienterminals auf den Stockwerken L1, L2, L3), die aus Darstellungsgründen nicht gezeigt sind. Die Komponenten des Aufzugssystems 10 und dessen Betriebsweise sind dem Fachmann allgemein bekannt, sodass detailliertere Erläuterungen hierzu nur soweit erfolgen, wie sie zum besseren Verständnis der hier beschriebenen Technologie erforderlich erscheinen. Die Aufzugssteuerung 32 verarbeitet beispielsweise einen empfangenen Aufzugsruf und steuert dementsprechend die Antriebseinheit 34, um die Aufzugkabine 49 in einem Schacht 18 mittels eines Tragmittels 22 zu verfahren. In der in Fig. 2 gezeigten Situation befindet sich der Besucher 8 bereits in der Aufzugskabine 20 und kann auf das gewünschte Zielstockwerk, beispielsweise auf das Stockwerk L3, auf dem sich der Gastgeber 2 befindet, transportiert werden. Bei Ankunft auf dem gewünschten Stockwerk L3 werden eine Kabinentür der Aufzugskabine 20 und eine Stockwerkstür geöffnet. Die Kabinentür und die Stockwerkstür sind im Folgenden als Aufzugstür 21 bezeichnet, wobei in Fig. 2 zwei Stockwerkstüren eingezeichnet und mit dem Bezugszeichen 21 gekennzeichnet sind. Je nach Ausgestaltung des Gebäudes 1, kann der Besucher 8 entweder direkt im Raum 4 des Gastgebers 2 oder auf einem Flur oder Gang ankommen, von wo aus der Besucher 8 den Raum 4 erreichen kann oder abgeholt werden kann. Ist der Besucher 8 beim Gastgeber 2 angekommen, kann von einem der beiden die Kommunikationsverbindung beendet werden.

In der in Fig. 1 und Fig. 2 gezeigten Situation ist die hier beschriebene Technologie in vorteilhafter Weise anwendbar, um für das Gebäude 1 definierte Sicherheitsanforderungen zu erfüllen, und zwar mit möglichst geringer Komplexität und ohne Einschränkung des Benutzungskomforts. Kurz und beispielhaft zusammengefasst erfolgt der Betrieb des Gebäudesteuerungssystems wie folgt: Sobald sich der Besucher 8 am Gebäude 1 befindet, kontaktiert der Besucher 8 den Gastgeber 2, um Zugang zum Gebäude 1 zu bekommen. Die Kontaktaufnahme erfolgt in einem Ausführungsbeispiel mittels des mobilen Geräts 6, das der Besucher 8 bei sich trägt. Das mobile Gerät 6 ist mit einer anwendungsspezifischen Software (App) ausgestattet, die die Kamera des mobilen Geräts 6 aktiviert und eine Kameraaufnahme des Besuchers 8 zur Kommunikationseinrichtung 7des Gastgebers 2 sendet. Die Kommunikationseinrichtung 7 des Gastgebers 2 ist in einem Ausführungsbeispiel ebenfalls mit einer solchen App ausgestattet. Der Gastgeber 2 kann mittels der empfangenen Kameraaufnahme die Identität des Besuchers 8 bestätigten und dem Besucher 8 Zugang zum Gebäude 1 gewähren. Der Gastgeber 2 kann daran anschließend mittels der Kommunikationseinrichtung 7 einen Aufzugsruf eingeben, wodurch das Aufzugsystem 10 in einen Besucherbetriebsmodus versetzt wird. Der Aufzugsruf veranlasst, dass eine Aufzugskabine 20 für eine Fahrt des Besuchers 8 reserviert wird und beispielsweise in eine Eingangshalle des Gebäudes 1 verfahren wird. Hat der Besucher 8 die Aufzugskabine 20 bestiegen, empfängt die Kommunikationseinrichtung 7 des Gastgebers 2 eine von der Kamera 24 erzeugte Kameraaufnahme aus einem Innenraum der Aufzugskabine 20. Je nach Ausgestaltung der Kamera 24 dient sie zur Aufnahme von einzelnen Bildern oder eines Videos. Eine Kameraaufnahme liegt beispielsweise in einem JPEG Format, einem MPEG Format oder ähnlichen Formaten vor. Mithilfe dieser Kameraaufnahme kann sich der Gastgeber 2 vergewissern, dass sich beispielsweise nur der Besucher 8 in der Aufzugskabine 20 befindet. Ist dies der Fall, gibt der Gastgeber 2 einen Aufzugsruf ein, sodass die Aufzugskabine 20 auf das gewünschte Zielstockwerk verfahren wird. Die Fahrt auf das gewünschte Zielstockwerk erfolgt ohne Halt, wodurch gewährleistet ist, dass sich in der auf dem Zielstockwerk ankommenden Aufzugskabine 20 nur der Besucher 8 befindet.

In dem in Fig. 2 gezeigten Teil des Gebäudes 1 sind ausserdem eine Gebäudesteuerung 28 (in Fig. 2 als BC bezeichnet) und eine Schnittstelleneinrichtung 26 (in Fig. 2 als IF bezeichnet) als weitere Komponenten des Gebäudesteuerungssystems angeordnet. Die Schnittstelleneinrichtung 26 ist an die Gebäudesteuerung 28 und die Aufzugssteuerung 14 kommunikativ gekoppelt. Die Schnittstelleneinrichtung 26 ist ausserdem mit der Kamera 24 kommunikativ gekoppelt, um vom Kabineninneren Kameraaufnahmen empfangen zu können. Die Schnittstelleneinrichtung 26 hat eine Sende- und Empfangseinrichtung 32 (in Fig. 2 als TX/RX bezeichnet). In einem Ausführungsbeispiel ist die Sende- und Empfangseinrichtung 32 zum Senden und Empfangen von Funksignalen ausgelegt, um über ein Kommunikationsnetzwerk 30 (im Folgenden als Netzwerk 30 bezeichnet) drahtlos kommunizieren zu können.

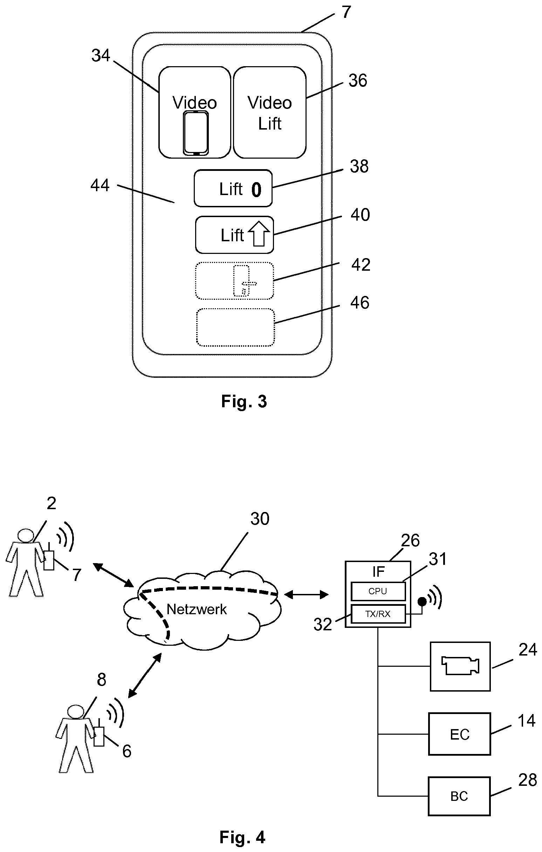

Die Schnittstelleneinrichtung 26 dient allgemein zur Übertragung von Daten, Sprache (bzw. Sprachdaten) und/oder Bilddaten, und deren Speicherung; dementsprechend ist sie für mindestens einen dieser Zwecke ausgestaltet. Die Schnittstelleneinrichtung 26 umfasst in einem Ausführungsbeispiel neben der Kamera 24 ausserdem eine Stromversorgung, eine zentrale Verarbeitungseinrichtung 31 (in Fig. 4 als CPU bezeichnet), Speichereinrichtungen (z. B. RAM, Flash Speicher), Datenanschlüsse (z.B. für USB, Ethernet) und eine Signalverarbeitungseinrichtung, beispielsweise für eine Ver- und Entschlüsselung von Daten. Die zentrale Verarbeitungseinrichtung ist ausgestaltet und programmiert, um diese Komponenten (einschliesslich der Sende- und Empfangseinrichtung 32) und die Kommunikation, die über diese Komponenten während des Betriebs stattfindet, zu steuern und zu überwachen. Die genannte Übertragung kann gemäss einer oder mehrerer Technologien erfolgen, beispielsweise der VoIP (voice over internet protocol) Technologie, einer Mobilfunktechnologie (z.B. 4G/LTE (long term evolution)) oder einer kabelgebundenen Technologie (z.B. der Ethernet Technologie).

Die Gebäudesteuerung 28 hat in einem Ausführungsbeispiel unter anderem die Aufgabe, den Zugang zum Gebäude 1 zu überwachen. Dazu kann die Gebäudesteuerung 28 mit der Funktionalität eines Zugangskontrollsystems ausgestattet sein oder mit einem separaten Zugangskontrollsystem verbunden sein. Diese Funktionalität bzw. das Zugangskontrollsystem überwacht den Gebäudeeingang 12, sodass nur berechtigte Personen das Gebäude 1 betreten können, beispielsweise durch Freigeben einer Tür, einer Schranke, eines Drehkreuzes, oder einer anderen physischen Barriere, beispielsweise durch Entriegeln eines elektronischen Schlosses.

Fig. 3 zeigt eine beispielhafte Benutzeroberfläche auf einer Anzeigeeinrichtung 44 der Kommunikationseinrichtung 7 des Gastgebers 2. Für eine Funktion gemäß der hier beschriebenen Technologie ist die Kommunikationseinrichtung 7 mit entsprechender Hardware ausgestattet, z.B. einem oder mehreren Kommunikationsmodulen für leitungsgebundene und/oder drahtlose Kommunikation, und der Anzeigeeinrichtung 44, z. B. eine berührungsempfindliche Anzeigeeinheit (auch als Touch Screen Display bezeichnet)). Die Kommunikationseinrichtung 7 ist ausserdem mit entsprechender Betriebs- und/oder Anwendungssoftware (z.B. ein oder mehrere Anwendungsprogramme (Apps)) ausgestattet. Je nach Ausgestaltung der Kommunikationseinrichtung 7 kann z. B. jedes Kommunikationsmodul und jede App über ein graphisches Nutzerinterface (auch als Graphical User Interface, GUI, bezeichnet) der Kommunikationseinrichtung 7 selektiv aktiviert und/oder deaktiviert werden. Wie oben erwähnt, kann die Kommunikationseinrichtung 7 beispielsweise ein Smartphone, ein Tablet PC, oder ein Notebook/Laptop Computer sein.

In dem in Fig. 3 gezeigten Ausführungsbeispiel ist die Kommunikationseinrichtung 7 ein Smartphone. Die Benutzeroberfläche wird für die hier beschriebene Technologie von einer auf der Kommunikationseinrichtung 7 installierten anwendungsspezifischen Software erzeugt; sie stellt das graphische Nutzerinterface dar, das die Bedienung der Kommunikationseinrichtung 7 für die hier beschriebene Technologie erleichtert. Die in Fig. 3 gezeigte Benutzeroberfläche enthält zwei Felder 34, 36 für die Darstellung von Kameraaufnahmen; das Feld 34 (links) ist für eine vom mobilen Gerät 6 des Besuchers 8 stammende Kameraaufnahme bestimmt und das Feld 36 (rechts) für eine von der Kamera 24 in der Aufzugskabine 20 stammende Kameraaufnahme. Es ist anzumerken, dass die Felder 34, 36 gleichzeitig oder zu unterschiedlichen Zeiten aktiv sein können. Die Felder 34, 36 sind beispielsweise zu unterschiedlichen Zeiten aktiv, wenn das Feld 34 (bereits) eine Kameraaufnahme des mobilen Geräts 6 des Besuchers 8 anzeigt, während im Feld 36 (noch) keine Kameraaufnahme aus der Aufzugskabine 20 angezeigt wird. Dies gilt auch im umgekehrten Fall, d.h. wenn die Kameraaufnahme aus der Aufzugskabine 20 im Feld 36 angezeigt wird, während das Feld 34 keine Kameraaufnahme anzeigt.

Ein Eingabefeld 38 (dargestellt durch das Wort "Lift" und der Ziffer "0") ermöglicht die Eingabe eines Rufs, der das Verfahren der Aufzugskabine 20 durch die Antriebseinheit 16 auf ein festgelegtes Stockwerk L1, L2, L3 veranlasst. Ein Eingabefeld 40 (dargestellt durch das Wort "Lift" und einen nach oben gerichteten Pfeil) ermöglicht die Eingabe eines Rufs, der das Verfahren der Aufzugskabine 20 auf ein festgelegtes Zielstockwerk veranlasst. Ein weiteres Eingabefeld 42 (dargestellt durch ein Symbol für eine Tür) ermöglicht dem Gastgeber 2, die Gebäudetür 12 vom Raum 4 aus zu entriegeln; diese Funktionalität kann in manchen Ausführungsbeispielen optional sein (das Eingabefeld 42 ist deshalb punktiert gezeichnet). Der Fachmann erkennt, dass die in Fig. 3 gezeigte Benutzeroberfläche beispielhaft ist und dass z. B. die Anordnung der Felder 34, 36, 38, 40, 42 und/oder deren Bezeichnungen/Beschriftungen und Symbole in anderen Ausführungsbeispielen der Benutzeroberfläche auf unterschiedliche Art und Weise gestaltet sein können. Der Fachmann erkennt auch, dass andere oder zusätzliche Felder dargestellt werden können, um beispielsweise ein Öffnen und/oder Schliessen von Aufzugstüren oder einen Alarm zu veranlassen. Dies ist in Fig. 3 durch ein punktiert gezeichnetes leeres Feld 46 symbolisch dargestellt.

Die Benutzeroberfläche des in Fig. 3 gezeigten Ausführungsbeispiel basiert auf der Annahme, dass sich der Gastgeber 2 bezogen auf die Eingangshalle auf einem oberen Stockwerk des Gebäudes 1 befindet. Ein durch Drücken/Berühren des Eingabefelds 38 erzeugter Aufzugsruf veranlasst, dass die Aufzugskabine 20 durch die Antriebseinheit 16 auf das Stockwerk, auf dem sich die Eingangshalle befindet (Eingangshallen-Stockwerk), verfahren wird, wenn sie sich auf einem anderen Stockwerk befindet und sobald sie frei ist und einen Ruf bedienen kann. Sollte sich die Aufzugskabine 20 bereits auf dem Eingangshallen-Stockwerk befinden, wird der erzeugte Aufzugsruf von der Aufzugssteuerung 14 ignoriert. Ein durch Drücken/Berühren des Eingabefelds 40 erzeugter Aufzugsruf veranlasst, dass die Aufzugskabine 20 nach oben auf ein festgelegtes Zielstockwerk verfahren wird, beispielsweise auf das Stockwerk, auf dem sich der Gastgeber 2 befindet, oder auf ein anderes Stockwerk; in einem Bürogebäude beispielsweise auf ein Stockwerk, auf dem sich Besprechungsräume o.ä. befinden.

Fig. 4 zeigt eine schematische Darstellung von Interaktionen der Schnittstelleneinrichtung 26, der Kommunikationseinrichtung 7 und des mobilen Geräts 6 über ein Netzwerk 30 gemäss einem Ausführungsbeispiel. Das Netzwerk 30 umfasst ein Mobilfunknetzwerk, das Kommunikation gemäß einem der bekannten Standards für Mobilfunkkommunikation ermöglicht; es kann sich zum Beispiel um ein GSM, UMTS oder LTE Mobilfunknetz handeln. Entsprechend dazu sind die Kommunikationseinrichtung 7, das mobile Gerät 6 und die Sende- und Empfangseinrichtung 32 jeweils mit Funkmodulen ausgestattet, die gemäß dem gewählten Standard für Mobilfunkkommunikation arbeiten. Dadurch kann beispielsweise das mobile Gerät 6 des Besuchers 8 mit der Kommunikationseinrichtung 7 des Gastgebers 2 kommunizieren, beispielsweise für Sprach- und/oder Datenkommunikation (einschließlich der Übertragung von Bilddaten).

Das Netzwerk 30 umfasst außerdem ein Datennetzwerk, das Teil einer IT Infrastruktur für das sogenannte Cloud Computing (umgangssprachlich auch als "Cloud" bezeichnet) sein kann. Darunter ist beispielsweise das Speichern von Daten in einem entfernten Rechenzentrum, aber auch das Ausführen von Programmen, die nicht lokal, sondern entfernt installiert sind, zu verstehen. Je nach Ausgestaltung kann eine bestimmte Funktionalität beispielsweise in der Schnittstelleneinrichtung 26 oder über die "Cloud" zur Verfügung gestellt werden. Dazu kann beispielsweise eine Softwareanwendung oder Programmteile davon in der "Cloud" ausgeführt werden. Die Schnittstelleneinrichtung 26 greift dann bei Bedarf auf diese Infrastruktur zu, um die Softwareanwendung auszuführen.

Auf diese IT Infrastruktur kann beispielsweise mittels des Mobilfunknetzwerks zugegriffen werden. Die Kommunikationseinrichtung 7, das mobile Gerät 6 und die Sende- und Empfangseinrichtung 32 sind Internet fähig und können mittels der Mobilfunkkommunikation auf das Internet bzw. auf dessen Funktionalitäten und Computereinrichtungen zugreifen. Die Kommunikation kann gemäss einem bekannten Übertragungsprotokoll erfolgen, beispielsweise TCP (Transmission Control Protocol), IP (Internet Protocol) und UDP (User Data Protocol).

Aus Fig. 4 ist ersichtlich, dass die Schnittstelleneinrichtung 26 bzw. deren Sende- und Empfangseinrichtung 32 mit dem Netzwerk 30 kommuniziert. Es ist z. B. angedeutet, dass die Kommunikationseinrichtung 7 des Gastgebers 2 mit dem mobilen Gerät 6 des Besuchers 8 und mit der Schnittstelleneinrichtung 36 kommuniziert; in dem gezeigten Ausführungsbeispiel kommuniziert das mobile Gerät 6 des Besuchers 8 allerdings nicht mit der Schnittstelleneinrichtung 26. Die Kamera 24, die Aufzugssteuerung 14 und die Gebäudesteuerung 28 sind an die Schnittstelleneinrichtung 26 gekoppelt. Diese Koppelung kann mittels eines gebäudeinternen Datennetzwerks erfolgen, das mit einem oder mehreren der oben genannten Datenanschlüsse (USB, Ethernet) verbunden ist. Das Datennetzwerk kann ein leitungsgebundenes Bussystem (z.B. ein Ethernet Bus) und/oder ein Funksystem (z. B. ein WLAN/WiFi System) umfassen.

In Fig. 2 ist das Netzwerk 30 schematisch ausserhalb des Gebäudes 1 gezeigt. Der Fachmann erkennt, dass das Netzwerk 30 ein gebäudeinternes Kommunikationsnetz umfassen kann. Das gebäudeinterne Kommunikationsnetz kann beispielsweise für Kommunikationszwecke der Gebäudesteuerung 28 und des Aufzugssystems 10, einschliesslich der Kommunikation zwischen dem Aufzugssystem 10, der Gebäudesteuerung 28 und der Schnittstelleneinrichtung 26, dienen.

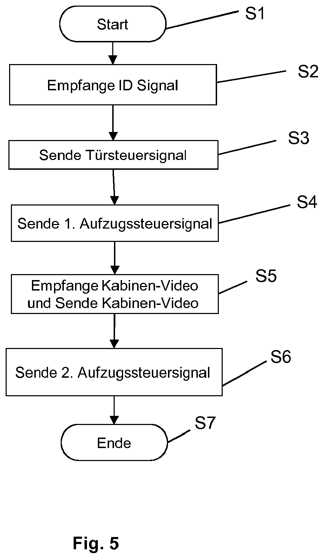

Mit dem Verständnis der oben beschriebenen Systemkomponenten und deren Funktionalitäten erfolgt im Folgenden in Verbindung mit Fig. 5 eine Beschreibung eines beispielhaften Verfahrens zum Betreiben des Systems, das das Aufzugssystem 10 umfasst; das Aufzugssystem 10 wird dabei in einem Besucherbetriebsmodus betrieben. Die Beschreibung erfolgt aus Sicht der Schnittstelleneinrichtung 26 und mit Bezug auf einen (einzigen) Besucher 8, der am Gebäudeeingang 12 das Gebäude 1 betreten möchte, um zum Gastgeber 2 zu gelangen. Der Fachmann erkennt, dass der Besucher 8 auch in Begleitung von einer oder mehreren Personen erscheinen kann. Der Besucher 8 trägt das mobile Gerät 6 bei sich und hat dessen Funkmodul und eine Softwareanwendung gemäß der hier beschriebenen Technologie aktiviert. Das Verfahren beginnt in einem Schritt S1 und endet in einem Schritt S7.

Befindet sich der Besucher 8 am Gebäudeeingang 12 kontaktiert der Besucher 8 den Gastgeber 2, um ihm seine Ankunft mitzuteilen. In einem Ausführungsbeispiel kontaktiert der Besucher 8 den Gastgeber 2 unter Verwendung der auf dem mobilen Gerät 6 installierten Anwendungssoftware, beispielsweise mittels des Netzwerks 30 und ähnlich der Funktionsweise des auf Intemet-Protokoll/IP Telefonie basierenden Chat-Dienstes "Facetime" von Apple, Inc. Diese Anwendungssoftware initiiert eine Kommunikationsverbindung zur Kommunikationseinrichtung 7 des Gastgebers 2 her. Antwortet der Gastgeber 2 auf die Kontaktaufnahme, wird eine Sprach- und Datenverbindung zwischen der Kommunikationseinrichtung 7 und dem mobilen Gerät 6 hergestellt. Dabei tauschen die Kommunikationseinrichtung 7 und das mobile Gerät 6 Daten aus, beispielsweise wird ein Code ausgetauscht, der nur für diese Kommunikationsverbindung gültig ist. Dadurch wird u.a. sichergestellt, dass die Kommunikation nur zwischen dem Besucher 8 und dem Gastgeber 2, bzw. deren Geräte, erfolgt.

Ist die Verbindung hergestellt, wird die Kamera des mobilen Geräts 6 des Besuchers 8 aktiviert, um eine Kameraaufnahme des Besuchers 8 zur Kommunikationseinrichtung 7 des Gastgebers 2 zu senden. Die Aktivierung der Kamera kann dem Besucher 8 mitgeteilt werden, beispielsweise durch Anzeigen einer Textmeldung oder eines Symbols und/oder durch Erzeugen eines hörbaren Signals (Ton, Tonfolge). Die Kommunikationseinrichtung 7 des Gastgebers 2 zeigt die empfangene Kameraaufnahme im Feld 34 (Fig. 3) an. Der Gastgeber 2 kann damit die Identität des Besuchers 8 bestätigten. Je nach Ausgestaltung kann auf einer Anzeigeeinheit des mobilen Geräts 6 eine Kameraaufnahme, die den Gastgeber 2 zeigt, angezeigt werden. Damit kann sich auch der Besucher 8 vergewissern, dass der Gastgeber auch die Person ist, die er besuchen möchte.

Bei bestätigter Identität des Besuchers 8 kann der Gastgeber 2 dem Besucher 8 Zugang zum Gebäude 1 gewähren. Dazu drückt (oder berührt) der Gastgeber 2 in einem Ausführungsbeispiel das Eingabefeld 42 auf der Benutzeroberfläche seiner Kommunikationseinrichtung 7. Die Anwendungssoftware kommuniziert diese Eingabe über das Netzwerk 30 zur Schnittstelleneinrichtung 26. Die Schnittstelleneinrichtung 26 empfängt daraufhin in einem Schritt S2 ein Bestätigungssignal (ID Signal), das die bestätigte Identität anzeigt. In einem Schritt S3 erzeugt die Schnittstelleneinrichtung 26 ein Steuersignal und sendet dieses in einem Ausführungsbeispiel an die Gebäudesteuerung 28. In Fig. 5 ist das Steuersignal zum besseren Verständnis des Ablaufdiagramms als Türsteuersignal bezeichnet; der Fachmann erkennt jedoch, dass durch diese Bezeichnung keine Einschränkung auf eine Tür beabsichtigt ist. Die Gebäudesteuerung 28 veranlasst daraufhin, dass der Gebäudeeingang 12 freigegeben wird und der Besucher 8 das Gebäude 1 betreten kann. Das Türsteuersignal kann beispielsweise ein elektronisches Schloss einer Gebäudetür entriegeln, in dem es über das gebäudeinterne Kommunikationsnetz ein elektrisches Relais des elektronischen Schlosses aktiviert, wodurch ein Riegel oder ein Verschluss freigegeben wird.

In einem Ausführungsbeispiel kann der Gastgeber 2 eine Rückmeldung erhalten, die anzeigt, dass der Gebäudeeingang 12 freigegeben und die Gebäudetür geöffnet wurden, was in der Regel bedeutet, dass der Besucher 8 das Gebäude 1 tatsächlich betreten hat. Je nach Ausgestaltung des Systems kann der Gastgeber 2 das Eintreten des Besuchers 8 mittels der im Feld 34 angezeigten Kameraaufnahme verfolgen und sich mit dem Besucher 8 unterhalten, um ihn beispielsweise zum Aufzugsystem 10 zu leiten. Die Übertragung der Kameraaufnahme kann je nach Ausgestaltung beispielsweise so lange erfolgen, bis der Besucher 8 beim Gastgeber 2 angekommen ist. Wie oben erwähnt, kann der Besucher 8 in einem Ausführungsbeispiel ebenfalls eine Kameraaufnahme des Gastgebers 2 empfangen.

Nachdem der Besucher 8 das Gebäude 1 betreten hat, kann der Gastgeber 2 das Eingabefeld 38 drücken bzw. berühren, um einen Aufzug für die Fahrt des Besuchers 8 zu reservieren. Dadurch kann beispielsweise ein Verfahren der Aufzugskabine 20 in die Eingangshalle veranlasst werden. Die Anwendungssoftware der Kommunikationseinrichtung 7 kommuniziert diese Eingabe als ein erstes Eingangssignal über das Netzwerk 30 zur Schnittstelleneinrichtung 26. Die Schnittstelleneinrichtung 26 erzeugt nach Empfang des ersten Eingangssignals ein erstes Aufzugssteuersignal und sendet dieses in einem Schritt S4 über das gebäudeinterne Kommunikationsnetz zur Aufzugssteuerung 14. Das erste Aufzugssteuersignal kann als ein Stockwerkruf aufgefasst werden, mit dem ein Aufzugspassagier auf einem Stockwerk L1, L2, L3 lediglich die gewünschte Fahrtrichtung (auf/ab) eingibt. Der Passagier ruft mit einem solchen Stockwerkruf eine Aufzugskabine auf das Stockwerk L1, L2, L3, auf dem sich der Passagier befindet. Der Stockwerkruf reserviert die Aufzugskabine 20 für die Fahrt des Besuchers 8 und versetzt das Aufzugsystem 10 in den Besucherbetriebsmodus.

Je nach Status des Aufzugsystems 10 wird die Aufzugskabine 20 unmittelbar auf das Eingangshallen-Stockwerk verfahren oder, wenn die Aufzugskabine 20 momentan einen anderen Ruf bedient, für eine Fahrt auf das Eingangshallen-Stockwerk reserviert, sodass die Aufzugskabine 20 möglichst zeitnah zum Einsteigen bereit ist. In beiden Fällen reserviert das erste Aufzugssteuersignal in einem Ausführungsbeispiel das Aufzugssystem 10 für eine Fahrt des Besuchers 8. Hat das Auftragssystem 10 mehrere Aufzugskabinen, wird eine dieser Aufzugskabinen reserviert. Dies verhindert beispielsweise, dass das Aufzugssystem 10 einen anderen Ruf bedient, während sich der Besucher 8 auf dem Weg vom Gebäudeeingang 12 zum Aufzugssystem 10 befindet. Um andere Nutzer darüber zu informieren, dass das Aufzugssystem 10 bzw. eine Aufzugskabine 20 kurzzeitig reserviert ist, kann auf einem Stockwerkterminal eine entsprechende Information angezeigt werden.

Je nach Ausgestaltung des Systems, kann der Gastgeber 2 den Betrieb der (reservierten) Aufzugskabine 20 steuern, wenn sich diese auf dem Eingangshallen-Stockwerk befindet. Der Gastgeber 2 kann in einem Ausführungsbeispiel die Aufzugstür 21 steuern, beispielsweise das Öffnen und Schliessen der Aufzugstür 21. Für diesen Zweck kann die Kommunikationseinrichtung 7 des Gastgebers 2 zusätzliche Felder auf der Benutzeroberfläche anzeigen, beispielsweise für die Funktionen "Tür auf' und "Tür zu". Das System kann beispielsweise so ausgestaltet sein, dass die Aufzugskabine 20 im Besucherbetriebsmodus auf dem Einstiegshallen-Stockwerk mit geschlossener Aufzugstür 21 auf den Besucher 8 wartet. Befindet sich der Besucher 8 an oder in der Nähe der Aufzugskabine 20, kann der Gastgeber 2 mittels einer Eingabe (z.B. "Tür auf') an der Kommunikationseinrichtung 7 das Öffnen der Aufzugstür 21 veranlassen. In einem anderen Ausführungsbeispiel kann die Aufzugskabine 20 auf dem Einstiegshallen-Stockwerk mit geöffneter Aufzugstür 21 auf den Besucher 8 warten. Unabhängig davon, ob die Aufzugskabine 20 mit geschlossener oder geöffneter Aufzugstür 21 wartet, kann der Gastgeber in einem Ausführungsbeispiel das Schliessen der Aufzugstür 21 mittels einer Eingabe (z.B. "Tür zu") an der Kommunikationseinrichtung 7 nur dann veranlassen, wenn der Besucher 8 allein in der Aufzugskabine 20 ist.

Ist der Besucher 8 in die Aufzugkabine 20 eingestiegen, erzeugt die Kamera 24 eine Kameraaufnahme des Besuchers 8, die zur Schnittstelleneinrichtung 26 gesendet wird, beispielsweise über das gebäudeinterne Kommunikationsnetz. Die Kamera 24 kann auf verschiedene Arten betrieben werden; sie kann beispielsweise immer aktiviert sein, unabhängig davon ob die Aufzugskabine 20 verfahren wird oder steht, leer oder mit mindestens einem Passagier besetzt ist. In diesem Fall ist das Betreten der Aufzugskabine 20 durch den Besucher 8 in der Kameraaufnahme ersichtlich (und vom Gastgeber 2 verfolgbar), sobald der Besucher 8 in einen Erfassungsbereich der Kamera 24 gelangt. Alternativ dazu kann die Kamera 24 aktiviert werden, wenn der Besucher 8 die Aufzugskabine 20 betritt; dies kann z.B. durch einen Lastsensor oder einen anderen Sensor (z.B. einen Bewegungssensor) erkannt werden. Aus Datenschutzgründen kann eine Zustimmung des Besuchers 8 zur Kameraaufnahme gewünscht sein. Diese Zustimmung kann implizit durch die Verwendung der auf dem mobilen Gerät 6 des Besuchers 8 installierten App gegeben sein. Der Gastgeber 2 und/oder die App können den Besucher 8 aber auch auffordern, die Zustimmung explizit zu geben, beispielsweise durch eine gesprochene Zustimmung oder durch eine entsprechende Eingabe (z.B. Tastendruck) am mobilen Gerät 6 oder einem Terminal in der Aufzugskabine 20.

In einem Schritt S5 empfängt die Schnittstelleneinrichtung 26 die Kameraaufnahme aus der Aufzugskabine 20 und sendet diese in einem Ausführungsbeispiel über das Netzwerk 30 zur Kommunikationseinrichtung 7 des Gastgebers 2. Der Fachmann erkennt, dass das Senden der Kameraaufnahme ganz oder teilweise über das gebäudeinterne Kommunikationsnetz, das in einem Ausführungsführungsbeispiel Teil des Netzwerks 30 sein kann, erfolgen kann, beispielsweise, wenn die Kommunikationseinrichtung 7 an einem festgelegten Ort in der Wohnung oder den Büro- oder Geschäftsräumen des Gastgebers 2 angeordnet ist, wie oben ausgeführt. Die Kommunikationseinrichtung 7 zeigt die Kameraaufnahme in einem Ausführungsbeispiel im Feld 36 an.

Der Gastgeber 2 kann aufgrund der im Feld 36 angezeigten Kameraaufnahme beurteilen, ob der Besucher 8 allein in der Aufzugskabine 20 ist. Kommt der Besucher 8 in Begleitung, kann der Gastgeber 2 analog zur Beurteilung des Besuchers 8 die Berechtigung der Begleitung beurteilen. Ist der Besucher 8 allein oder mit berechtigter Begleitung in der Aufzugskabine 20, kann der Gastgeber 2 das Eingabefeld 40 drücken bzw. berühren, um ein Verfahren der Aufzugskabine 20 auf das festgelegte Zielstockwerk zu veranlassen. Die Anwendungssoftware kommuniziert diese Eingabe über das Netzwerk 30 zur Schnittstelleneinrichtung 26. Die Schnittstelleneinrichtung 26 erzeugt daraufhin ein zweites Aufzugssteuersignal und sendet dieses in einem Schritt S6 über das gebäudeinterne Datennetz zur Aufzugssteuerung 14. Das zweite Aufzugssteuersignal kann analog zu einem Aufzugssystem, bei dem durch den Passagier auf dem Stockwerk L1, L2, L3 die Fahrtrichtung eingegeben wird, als ein Kabinenruf aufgefasst werden. Der Passagier befindet sich dabei in der Aufzugskabine 20 und gibt das gewünschte Zielstockwerk an einem Kabinenterminal ein.

Das in Fig. 5 gezeigte beispielhafte Verfahren endet in Schritt S7.

Die Ankunft des Besuchers 8 auf dem Zielstockwerk kann dem Gastgeber 2 ebenfalls auf der Benutzeroberfläche der Kommunikationseinrichtung 7 mitgeteilt werden. Dazu erzeugt die Aufzugssteuerung 14 bei Ankunft auf dem Zielstockwerk ein Statussignal (beispielsweise abgeleitet aus einem Signal, das den Türzustand (z. B. Tür offen) anzeigt) und sendet dieses zur Schnittstelleneinrichtung 26. Die Schnittstelleneinrichtung 26 leitet dieses Statussignal über das Netzwerk 30 zur Kommunikationseinrichtung 7 des Gastgebers 2 weiter. Die Anwendungssoftware der Kommunikationseinrichtung 7 erzeugt daraus eine Meldung auf der Benutzeroberfläche des mobilen Geräts 6.

Nachdem der Besucher 8 die Aufzugskabine 20 verlassen hat, wird die genannte Reservierung aufgehoben. Das Aufzugssystem 10 kann dann im normalen Betrieb (Normalbetriebsmodus) neu eingehende Rufe bedienen. Die Reservierung des Aufzugssystems 10 bzw. der Aufzugskabine 20 dauert nur eine relativ kurze Zeit; sie ist bestimmt durch die Zeit, die der Besucher 8 für den Weg vom Gebäudeeingang 12 zum Zielstockwerk benötigt. Eine mögliche Beeinträchtigung anderer Personen in der Nutzung des Aufzugssystem 10, z.B. längere Wartezeiten, weil momentan keine oder weniger Aufzugskabinen zur Verfügung stehen, ist daher gering.

Der Fachmann erkennt, dass das in Fig. 5 gezeigte Verfahren für verschiedene Anwendungsfälle abgeändert werden kann. Der Besucher 8 kann sich beispielsweise bereits im Gebäude 1 befinden, sodass es keiner Öffnung der Gebäudetür 12 bedarf. In diesem Fall kann die Erzeugung des Steuersignals zur Türöffnung in Schritt S3 entfallen. Der Besucher 8 kann beispielsweise zu einem früheren Zeitpunkt in das Gebäude 1 gelassen worden sein, entweder vom Gastgeber 2 oder einer anderen (berechtigten) Person im Gebäude 1, ohne unmittelbar den Gastgeber 2 besuchen zu wollen. Beispielsweise kann ein Handelsvertreter zu unterschiedlichen Zeiten mehrere Kunden im Gebäude 1 besuchen wollen. Will der sich bereits im Gebäude 1 befindliche Besucher 8 schliesslich den Gastgeber 2 besuchen, kann er den Gastgeber 2 wie in Verbindung mit Schritt S2 beschrieben kontaktieren, damit der Gastgeber 2 eine Aufzugskabine 20 für die Fahrt des Besuchers 8 reserviert.

Die Sicherheitsanforderungen für das Gebäude 1 können vorsehen, dass ein Besucher 8 auch auf dem Weg aus dem Gebäude 1 überwacht wird, beispielsweise um sicherzustellen, dass der Besucher 8 das Gebäude 1 auch tatsächlich verlässt. Die hier beschriebene Technologie kann auch für solche Sicherheitsanforderungen angepasst werden. Gegen Ende des Besuchs kann z.B. der Gastgeber 2 kann die Kommunikationseinrichtung 7 entweder automatisch oder mittels einer manuellen Eingabe durch den Gastgeber 2 von einem oben beschriebenen Empfangsmodus in einen Verabschiedungsmodus wechseln. Beispielsweise kann im Verabschiedungsmodus durch Berühren des Felds 40 die Aufzugskabine 20 für eine Fahrt in die Eingangshalle reserviert werden. Hat der Besucher 8 schliesslich die Aufzugskabine 20 bestiegen, kann der Gastgeber 2 das Feld 38 berühren, um die Fahrt in die Eingangshalle zu veranlassen. In einem Ausführungsbeispiel erfolgt keine Übertragung einer Kameraaufnahme aus dem Innenraum der Aufzugskabine 20 zur Kommunikationseinrichtung 7, sie kann aber erfolgen, wenn z.B. der Gastgeber 2 dies wünscht. Verlässt der Besucher 8 die Aufzugskabine 20 in der Eingangshalle, kann der Gastgeber 2 den Weg des Besuchers 8 aus dem Gebäude 1 mittels der Kameraaufnahme verfolgen. Hat der Besucher 8 das Gebäude 1 verlassen, kann einer der beiden die Kommunikationsverbindung beenden.

Ausserdem kann entweder der Gastgeber 2 oder der Besucher 8 eine Kommunikationsverbindung zwischen der Kommunikationseinrichtung 7 und dem mobilen Gerät 6 des Besuchers 8 initiieren, wie an anderer Stelle dieser Beschreibung beschrieben. Damit können sich in diesem Ausführungsbeispiel der Gastgeber 2 und der Besucher 8 mittels ihrer jeweiligen Geräte (6, 7) gegenseitig sehen.

Die hier beschriebene Technologie trägt zur Erfüllung der Sicherheitsanforderungen auch dann bei, wenn der Besucher 8 kein mobiles Gerät 6 bei sich trägt. In einem solchen Fall kann der Besucher 8 eine am Gebäudeeingang 12 vorhandene Klingel oder Gegensprechanlage nutzen, um den Gastgeber 2 zu kontaktieren. Der Gastgeber 2 kann daraufhin die Gebäudetür öffnen, um dem Besucher 8 ins Gebäude 1 zu lassen. Der Gastgeber 2 kann dann, wie oben vorhergehend beschrieben, die Aufzugskabine 20 reservieren und die Fahrt auf das Zielstockwerk veranlassen.

## Patentansprüche

1. Verfahren zum Betreiben eines Systems mit einem Aufzugssystem (10) und einer Schnittstelleneinrichtung (26) für eine Kommunikation über ein Kommunikationsnetzwerk (30), wobei das Aufzugssystem (10) eine Aufzugssteuerung (14), eine Aufzugskabine (20) und eine Antriebseinheit (16), die bei einer Ansteuerung durch die Aufzugssteuerung (14) die Aufzugskabine (20) zwischen Stockwerken (L1, L2, L3) des Gebäudes (1) verfährt, umfasst, wobei in der Aufzugskabine (20) eine Kamera (24) angeordnet ist, um eine Kameraaufnahme aus einem Innenraum der Aufzugskabine (24) zu erzeugen, wobei das Verfahren umfasst:
Empfangen eines ersten Eingangssignals durch die Schnittstelleneinrichtung (26), die kommunikativ an die Aufzugssteuerung (14) und die Kamera (24) gekoppelt ist, wobei die Schnittstelleneinrichtung (26) eine Verarbeitungseinrichtung (31) und eine Sende- und Empfangseinrichtung (32) hat, um über das Kommunikationsnetz (30) mit einer Kommunikationseinrichtung (7) eines Gastgebers (2) und einem mobilen Gerät (6) eines Besuchers (8) zu kommunizieren, wobei das erste Eingangssignal anzeigt, dass der Gastgeber (2) mittels einer Eingabe an der Kommunikationseinrichtung (7) ein Verfahren der Aufzugskabine (20) auf ein erstes festgelegtes Stockwerk (L1, L2, L3), auf dem der Besucher (8) die Aufzugskabine (20) besteigen möchte, veranlasst;
Erzeugen eines ersten Aufzugssteuersignals durch die Verarbeitungseinrichtung (31) der Schnittstelleneinrichten (26) basierend auf dem ersten Eingangssignal;
Senden des ersten Aufzugssteuersignals durch die Verarbeitungseinrichtung (31) der Schnittstelleneinrichtung (26) zur Aufzugssteuerung (10), um das Verfahren der Aufzugskabine (20) auf das erste festgelegte Stockwerk (L1, L2, L3) zu veranlassen;
Empfangen einer Kameraaufnahme aus dem Innenraum der Aufzugskabine (24) durch die Schnittstelleneinrichtung (26), wenn der Besucher (8) die Aufzugskabine (20) bestiegen hat;
Senden der Kameraaufnahme durch die Schnittstelleneinrichtung (26) über das Kommunikationsnetzwerk (30) zur Kommunikationseinrichtung (7);
Empfangen eines zweiten Eingangssignals durch die Schnittstelleneinrichtung (26) über das Kommunikationsnetzwerk (30), wobei das zweite Eingangssignal dadurch erzeugt wird, dass der Gastgeber (2) mittels einer Eingabe an der Kommunikationseinrichtung (7) ein Verfahren der Aufzugskabine (20) auf ein zweites festgelegtes Stockwerk (L1, L2, L3), auf dem der Besucher (8) aus der Aufzugskabine (20) aussteigen möchte, veranlasst;
Erzeugen eines zweiten Aufzugssteuersignals durch die Schnittstelleneinrichten (26) basierend auf dem zweiten Eingangssignal; und
Senden des zweiten Aufzugssteuersignals durch die Schnittstelleneinrichtung (26) zur Aufzugssteuerung (10), um das Verfahren der Aufzugskabine (20) auf das zweite festgelegte Stockwerk (L1, L2, L3) zu veranlassen.

2. Verfahren nach Anspruch 1, ausserdem aufweisend:
Empfangen eines dritten Eingangssignals durch die Schnittstelleneinrichtung (26) über das Kommunikationsnetzwerk (30), wobei das dritte Eingangssignal dadurch erzeugt wird, dass der Gastgeber (2) mittels einer Eingabe an der Kommunikationseinrichtung (7) eine Identität des Besuchers (8) bestätigt;
Erzeugen eines Türsteuersignals basierend auf dem dritten Eingangssignal; und
Senden des Türsteuersignals durch die Schnittstelleneinrichtung (26) zu einer Gebäudesteuerung (28), um eine Freigabe eines Gebäudeeingangs (12) zu veranlassen.

3. Verfahren nach Anspruch 2, ausserdem aufweisend Senden einer Rückmeldung durch die Schnittstelleneinrichtung (26) über das Kommunikationsnetzwerk (30) zur Kommunikationseinrichtung (7), um den Gastgeber (2) darüber zu informieren, dass der Gebäudeeingang (12) geöffnet ist.

4. Verfahren nach einem der vorhergehenden Ansprüche, bei dem das Senden der Kameraaufnahme zur Kommunikationseinrichtung (7) erfolgt, solange sich der Besucher (8) in der Aufzugskabine (20) befindet.

5. Verfahren nach einem der vorhergehenden Ansprüche, ausserdem aufweisend Empfangen eines von der Aufzugssteuerung (14) erzeugten Statussignals durch die Schnittstelleneinrichtung (26), wobei das Statussignal anzeigt, dass die Aufzugskabine (20) das zweite festgelegte Stockwerk (L1, L2, L3) erreicht hat, und Senden des Statussignals zur Kommunikationseinrichtung (7), um den Gastgeber (2) zu informieren, dass der Besucher (8) auf dem Zielstockwerk angekommen ist.

6. Verfahren nach einem der vorhergehenden Ansprüche, bei dem das erste Aufzugssteuersignals das Aufzugsystem (10) von einem Normalbetriebsmodus in einen Besucherbetriebsmodus setzt.

7. Verfahren nach Anspruch 6, bei dem das Aufzugsystem (10) vom Besucherbetriebsmodus in den Normalbetriebsmodus gesetzt wird, wenn die Aufzugskabine (20) das zweite festgelegte Stockwerk (L1, L2, L3) erreicht hat.

8. Verfahren nach einem der vorhergehenden Ansprüche, außerdem aufweisend Senden einer von der Kommunikationseinrichtung (7) erzeugten Kameraaufnahme durch die Schnittstelleneinrichtung (26) zu einem mobilen Gerät (6) des Besuchers (8), wobei die Kameraaufnahme den Gastgeber (2) zeigt.

9. Verfahren nach einem der vorhergehenden Ansprüche, außerdem aufweisend
Empfangen eines vierten Eingangssignals durch die Schnittstelleneinrichtung (26) über das Kommunikationsnetzwerk (30), wobei das vierte Eingangssignal dadurch erzeugt wird, dass der Gastgeber (2) mittels einer Eingabe an der Kommunikationseinrichtung (7) ein Öffnen oder Schliessen einer Aufzugstür (21) veranlasst;
Erzeugen eines dritten Aufzugssteuersignals durch die Schnittstelleneinrichtung (26) basierend auf dem vierten Eingangssignal; und
Senden des dritten Aufzugssteuersignals zur Aufzugssteuerung (14), wobei das dritte Aufzugssteuersignal ein Öffnen oder Schliessen der Aufzugstür (21) bewirkt.

10. System für ein Gebäude (1) mit mehreren Stockwerken (L1, L2, L3), umfassend:
ein Aufzugssystem (10) mit einer Aufzugssteuerung (14), einer Aufzugskabine (20) und einer Antriebseinheit (16), die bei einer Ansteuerung durch die Aufzugssteuerung (14) die Aufzugskabine (20) zwischen den Stockwerken (L1, L2, L3) des Gebäudes (1) verfährt, wobei in der Aufzugskabine (20) eine Kamera (24) angeordnet ist, um eine Kameraaufnahme eines Innenraums der Aufzugskabine (24) zu erzeugen; und
eine Schnittstelleneinrichtung (26), die kommunikativ an die Aufzugssteuerung (14) und die Kamera (24) gekoppelt ist, wobei die Schnittstelleneinrichtung (26) eine Verarbeitungseinrichtung (31) und eine Sende- und Empfangseinrichtung (32) hat, um über ein Kommunikationsnetz (30) mit einer Kommunikationseinrichtung (7) eines Gastgebers (2) und einem mobilen Gerät (6) eines Besuchers (8) zu kommunizieren; wobei die Verarbeitungseinrichtung (31) im Betrieb ein Verfahren mit folgenden Schritten ausführt:
Empfangen eines ersten Eingangssignals durch die Schnittstelleneinrichtung (26), wobei das erste Eingangssignal anzeigt, dass der Gastgeber (2) mittels einer Eingabe an der Kommunikationseinrichtung (7) ein Verfahren der Aufzugskabine (20) auf ein erstes festgelegtes Stockwerk (L1, L2, L3), auf dem ein Besucher (8) die Aufzugskabine (20) besteigen möchte, veranlasst;
Erzeugen eines ersten Aufzugssteuersignals durch die Schnittstelleneinrichten (26) basierend auf dem ersten Eingangssignal;
Senden des ersten Aufzugssteuersignals durch die Schnittstelleneinrichtung (26) zur Aufzugssteuerung (10), um das Verfahren der Aufzugskabine (20) auf das erste festgelegte Stockwerk (L1, L2, L3) zu veranlassen;
Empfangen der Kameraaufnahme aus dem Innenraum der Aufzugskabine (24) durch die Schnittstelleneinrichtung (26), wenn der Besucher (8) die Aufzugskabine (20) bestiegen hat;
Senden der Kameraaufnahme durch die Schnittstelleneinrichtung (26) über das Kommunikationsnetzwerk (30) zur Kommunikationseinrichtung (7);
Empfangen eines zweiten Eingangssignals durch die Schnittstelleneinrichtung (26) über das Kommunikationsnetzwerk (30), wobei das zweite Eingangssignal dadurch erzeugt wird, dass der Gastgeber (2) mittels einer Eingabe an der Kommunikationseinrichtung (7) ein Verfahren der Aufzugskabine (20) auf ein zweites festgelegtes Stockwerk (L1, L2, L3), auf dem der Besucher (8) aus der Aufzugskabine (20) aussteigen möchte, veranlasst;
Erzeugen eines zweiten Aufzugssteuersignals durch die Schnittstelleneinrichten (26) basierend auf dem zweiten Eingangssignal; und
Senden des zweiten Aufzugssteuersignals durch die Schnittstelleneinrichtung (26) zur Aufzugssteuerung (10), um das Verfahren der Aufzugskabine (20) auf das zweite festgelegte Stockwerk (L1, L2, L3) zu veranlassen.

11. System nach Anspruch 10, bei dem das Kommunikationsnetzwerk (30) eine Infrastruktur für Cloud Computing umfasst.

12. System nach einem der Ansprüche 10-11, bei dem die Sende- und Empfangseinrichtung (32) für eine Kommunikation per Funk ausgestattet ist.

13. System nach einem der Ansprüche 10-12, bei dem die Kommunikationseinrichtung (7) an eine Gebäudeinstallation gekoppelt ist, wobei die Gebäudeinstallation mit der Schnittstelleneinrichtung (26) verbunden ist.

14. System nach einem der Ansprüche 10-12, bei dem die Kommunikationseinrichtung (7) ein mobiles Gerät ist, das über eine Funkverbindung mit der Schnittstelleneinrichtung (26) kommuniziert.

## Claims

1. A method for operating a system with an elevator system (10) and an interface (26) for communication via a communication network (30), wherein the elevator system (10) comprises an elevator control (14), an elevator car (20) and a drive unit (16), which moves the elevator car (20) between floors (L1, L2, L3) of the building (1) upon activation by the elevator control (14), wherein a camera (24) is arranged in the elevator car (20) in order to produce a camera recording of an interior of the elevator car (24), and wherein the method comprises the steps of:
receiving a first input signal by means of the interface (26), which is communicatively linked to the elevator control (14) and the camera (24), wherein the interface (26) has a processing unit (31) and a transmitting and receiving unit (32) in order to communicate with a communication device (7) of a host (2) and a mobile device (6) of a visitor (8) via a communication network (30), and wherein the first input signal indicates that the host (2) initiates a movement of the elevator car (20) to a first defined floor (L1, L2, L3), on which the visitor (8) would like to enter the elevator car (20), by means of an input on a communication device (7);
generating a first elevator control signal by means of the processing unit (31) of the interface (26) based on the first input signal;
transmitting the first elevator control signal to the elevator control (10) by means of the processing unit (31) of the interface (26) in order to initiate the movement of the elevator car (20) to the first defined floor (L1, L2, L3);
receiving a camera recording of the interior of the elevator car (24) by means of the interface (26) once the visitor (8) has entered the elevator car (20);
transmitting the camera recording to the communication device (7) by means of the interface (26) via the communication network (30);
receiving a second input signal by means of the interface (26) via the communication network (30), wherein the second input signal is generated in that the host (2) initiates a movement of the elevator car (20) to a second defined floor (L1, L2, L3), on which the visitor (8) would like to exit the elevator car (20), by means of an input on the communication device (7);
generating a second elevator control signal by means of the interface (26) based on the second input signal; and
transmitting the second elevator control signal to the elevator control (10) by means of the interface (26) in order to initiate the movement of the elevator car (20) to the second defined floor (L1, L2, L3).

2. The method according to claim 1, furthermore comprising the steps of:
receiving a third input signal by means of the interface (26) via the communication network (30), wherein the third input signal is generated in that the host (2) confirms an identity of the visitor (8) by means of an input on the communication device (7);
generating a door control signal based on the third input signal; and
transmitting the door control signal to a building control (28) by means of the interface (26) in order to initiate the release of a building entrance (12).

3. The method according to claim 2, furthermore comprising the step of transmitting a reply to the communication device (7) by means of the interface (26) via the communication network (30) in order to inform the host (2) that the building entrance (12) has been opened.

4. The method according to one of the preceding claims, in which the camera recording is transmitted to the communication device (7) as long as the visitor (8) is located in the elevator car (20).

5. The method according to one of the preceding claims, furthermore comprising the steps of receiving a status signal generated by the elevator control (14) by means of the interface (26), wherein the status signal indicates that the elevator car (20) has reached the second defined floor (L1, L2, L3), and transmitting the status signal to the communication device (7) in order to inform the host (2) that the visitor (8) has arrived on the destination floor.

6. The method according to one of the preceding claims, in which the first elevator control signal switches the elevator system (10) from a normal operating mode into a visitor operating mode.

7. The method according to claim 6, in which the elevator system (10) is switched from the visitor operating mode into the normal operating mode once the elevator car (20) has reached the second defined floor (L1, L2, L3).

8. The method according to one of the preceding claims, furthermore comprising the step of transmitting a camera recording produced by the communication device (7) to a mobile device (6) of the visitor (8) by means of the interface (26), wherein the camera recording shows the host (2).

9. The method according to one of the preceding claims, furthermore comprising the steps of
receiving a fourth input signal by means of the interface (26) via the communication network (30), wherein the fourth input signal is generated in that the host (2) initiates opening or closing of an elevator door (21) by means of an input on the communication device (7);
generating a third elevator control signal by means of the interface (26) based on the fourth input signal; and
transmitting the third elevator control signal to the elevator control (14), wherein the third elevator control signal causes the elevator door (21) to open or close.

10. A system for a building (1) with multiple floors (L1, L2, L3), comprising:
an elevator system (10) with an elevator control (14), an elevator car (20) and a drive unit (16), which moves the elevator car (20) between the floors (L1, L2, L3) of the building (1) upon activation by the elevator control (14), wherein a camera (24) is arranged in the elevator car (20) in order to produce a camera recording of an interior of the elevator car (24); and
an interface (26) that is communicatively linked to the elevator control (14) and the camera (24), wherein the interface (26) has a processing unit (31) and a transmitting and receiving unit (32) in order to communicate with a communication device (7) of a host (2) and a mobile device (6) of a visitor (8) via a communication network (30), and wherein the processing unit (31) carries out a method with the following steps during the operation of the system:
receiving a first input signal by means of the interface (26), wherein the first input signal indicates that the host (2) initiates a movement of the elevator car (20) to a first defined floor (L1, L2, L3), on which a visitor (8) would like to enter the elevator car (20), by means of an input on a communication device (7);
generating a first elevator control signal by means of the interface (26) based on the first input signal;
transmitting the first elevator control signal to the elevator control (10) by means of the interface (26) in order to initiate the movement of the elevator car (20) to the first defined floor (L1, L2, L3);
receiving a camera recording of the interior of the elevator car (24) by means of the interface (26) once the visitor (8) has entered the elevator car (20);
transmitting the camera recording to the communication device (7) by means of the interface (26) via the communication network (30);
receiving a second input signal by means of the interface (26) via the communication network (30), wherein the second input signal is generated in that the host (2) initiates a movement of the elevator car (20) to a second defined floor (L1, L2, L3), on which the visitor (8) would like to exit the elevator car (20), by means of an input on the communication device (7);
generating a second elevator control signal by means of the interface (26) based on the second input signal; and
transmitting the second elevator control signal to the elevator control (10) by means of the interface (26) in order to initiate the movement of the elevator car (20) to the second defined floor (L1, L2, L3).

11. The system according to claim 10, in which the communication network (30) comprises an infrastructure for cloud computing.

12. The system according to one of claims 10-11, in which the transmitting and receiving unit (32) is equipped for communicating via radio.

13. The system according to one of claims 10-12, in which the communication device (7) is linked to a building installation, wherein the building installation is connected to the interface (26).

14. The system according to one of claims 10-12, in which the communication device (7) is a mobile device that communicates with the interface (26) via a radio link.

## Revendications

1. Procédé opérationnel d'un système doté d'un système d'ascenseur (10) et d'un dispositif d'interface (26) pour une communication via un réseau de communication (30), le système d'ascenseur (10) comprenant une commande d'ascenseur (14), une cabine d'ascenseur (20) et une unité d'entraînement (16), qui lors d'une activation par la commande d'ascenseur (14), déplace la cabine d'ascenseur (20) entre des étages (L1, L2, L3) du bâtiment (1), dans la cabine d'ascenseur (20) étant placée une caméra (24), destinée à générer une prise de vue de caméra à partir d'un espace intérieur de la cabine d'ascenseur (24), le procédé comprenant :
la réception d'un premier signal d'entrée par le dispositif d'interface (26), qui est connecté en communication avec la commande d'ascenseur (14) et avec la caméra (24), le dispositif d'interface (26) disposant d'un dispositif de traitement (31) et d'un dispositif émetteur-récepteur (32), pour communiquer via le réseau de communication (30) avec un dispositif de communication (7) d'un hôte (2) et avec un appareil mobile (6) d'un visiteur (8), le premier signal d'entrée indiquant que l'hôte (2) initie au moyen d'une saisie sur le dispositif de communication (7) un déplacement de la cabine d'ascenseur (20) vers un premier étage (L1, L2, L3) déterminé, sur lequel le visiteur (8) souhaite monter dans la cabine d'ascenseur (20) ;
la génération par le dispositif de traitement (31) du dispositif d'interface (26) d'un premier signal de commande d'ascenseur sur la base du premier signal d'entrée ;
l'émission par le dispositif de traitement (31) du dispositif d'interface (26) du premier signal de commande d'ascenseur vers la commande d'ascenseur (10), pour initier le déplacement de la cabine d'ascenseur (20) vers le premier étage (L1 L2, L3) déterminé ;
la réception par le dispositif d'interface (26) d'une prise de vue de caméra à partir de l'espace intérieur de la cabine d'ascenseur (24), lorsque le visiteur (8) est monté dans la cabine d'ascenseur (20) ;
l'émission par le dispositif d'interface (26) de la prise de vue de caméra via le réseau de communication (30) vers le dispositif de communication (7) ;
la réception par le dispositif d'interface (26) d'un deuxième signal d'entrée via le réseau de communication (30), le deuxième signal d'entrée étant généré en ce que l'hôte (2) initie au moyen d'une saisie sur le dispositif de communication (7) un déplacement de la cabine d'ascenseur (20) vers un deuxième étage (L1, L2, L3) déterminé, auquel le visiteur (8) souhaite quitter la cabine d'ascenseur (20) ;
la génération par le dispositif d'interface (26) d'un deuxième signal de commande d'ascenseur, sur la base du deuxième signal d'entrée ; et
l'émission par le dispositif d'interface (26) du deuxième signal de commande d'ascenseur vers la commande d'ascenseur (10), pour initier le déplacement de la cabine d'ascenseur (20) vers le deuxième étage (L1, L2, L3) déterminé.

2. Procédé selon la revendication 1, comportant par ailleurs :
la réception par le dispositif d'interface (26) d'un troisième signal d'entrée via le réseau de communication (30), le troisième signal d'entrée étant généré en ce que l'hôte (2) confirme une identité du visiteur (8) au moyen d'une saisie sur le dispositif de communication (7) ;
la génération d'un signal de commande de porte sur la base du troisième signal d'entrée ;
et
l'émission par le dispositif d'interface (26) du signal de commande de porte vers une commande du bâtiment (28), pour initier une libération d'une entrée de bâtiment (12).

3. Procédé selon la revendication 2, comportant par ailleurs l'émission par le dispositif d'interface (26) d'un retour d'information via le réseau de communication (30) vers le dispositif de communication (7), pour informer l'hôte (2) que l'entrée de bâtiment (12) est ouverte.

4. Procédé selon l'une quelconque des revendications précédentes, lors duquel l'émission de la prise de vue de caméra vers le dispositif de communication (7) s'effectue aussi longtemps que le visiteur (8) se trouve dans la cabine d'ascenseur (20).

5. Procédé selon l'une quelconque des revendications précédentes, comportant par ailleurs la réception par le dispositif d'interface (26) d'un signal d'état généré par la commande d'ascenseur (14), le signal d'état indiquant que la cabine d'ascenseur (20) a atteint le deuxième étage (L1, L2, L3) déterminé et l'émission du signal d'état vers le dispositif de communication (7), pour informer l'hôte (2) que le visiteur (8) est arrivé à l'étage de destination.

6. Procédé selon l'une quelconque des revendications précédentes, lors duquel le premier signal de commande d'ascenseur fait passer le système d'ascenseur (10) d'un mode opératoire normal dans un mode opératoire visiteur.

7. Procédé selon la revendication 6, lors duquel le système d'ascenseur (10) passe du mode opératoire visiteur dans le mode opératoire normal lorsque la cabine d'ascenseur (20) a atteint le deuxième étage (L1, L2, L3) déterminé.

8. Procédé selon l'une quelconque des revendications précédentes, comportant par ailleurs l'émission par le dispositif d'interface (26) vers un appareil mobile (6) du visiteur (8) d'une prise de vue de caméra générée par le dispositif de communication (7), la prise de vue de caméra représentant l'hôte (2).

9. Procédé selon l'une quelconque des revendications précédentes, comportant par ailleurs la réception par le dispositif d'interface (26) d'un quatrième signal d'entrée via le réseau de communication (30), le quatrième signal d'entrée étant généré en ce que l'hôte (2) initie au moyen d'une saisie sur le dispositif de communication (7) une ouverture ou une fermeture d'une porte d'ascenseur (21) ;
la génération par le dispositif d'interface (26) d'un troisième signal de commande d'ascenseur sur la base du quatrième signal d'entrée ;
l'émission du troisième signal de commande d'ascenseur vers la commande d'ascenseur (14), le troisième signal de commande d'ascenseur provoquant une ouverture ou une fermeture de la porte d'ascenseur (21).

10. Système destiné à un bâtiment (1) à plusieurs étages (L1, L2, L3), comprenant :
un système d'ascenseur (10) doté d'une commande d'ascenseur (14), d'une cabine d'ascenseur (20) et d'une unité d'entraînement (16), qui lors d'une activation par la commande d'ascenseur (14) déplace la cabine d'ascenseur (20) entre les étages (L1, L2, L3) du bâtiment (1), dans la cabine d'ascenseur (20) étant placée une caméra (24), destinée à générer une prise de vue de caméra d'une espace intérieur de la cabine d'ascenseur (24) ; et
un dispositif d'interface (26), qui est connecté en communication avec la commande d'ascenseur (14) et avec la caméra (24), le dispositif d'interface (26) disposant d'un dispositif de traitement (31) et d'un dispositif émetteur-récepteur (32), pour communiquer via un réseau de communication (30) avec un dispositif de communication (7) d'un hôte (2) et avec un appareil mobile (6) d'un visiteur (8) ; en service, le dispositif de traitement (31) réalisant un procédé comprenant les étapes suivantes :
la réception par le dispositif d'interface (26) d'un premier signal d'entrée, le premier signal d'entrée indiquant que l'hôte (2) initie au moyen d'une saisie sur le dispositif de communication (7) un déplacement de la cabine d'ascenseur (20) vers un premier étage (L1, L2, L3) déterminé, auquel un visiteur (8) souhaite monter dans la cabine d'ascenseur (20) ;
la génération par le dispositif d'interface (26) d'un premier signal de commande d'ascenseur sur la base du premier signal d'entrée ;
l'émission par le dispositif d'interface (26) du premier signal de commande d'ascenseur vers la commande d'ascenseur (10), pour initier le déplacement de la cabine d'ascenseur (20) vers le premier étage (L1, L2, L3) déterminé ;
la réception par le dispositif d'interface (26) de la prise de vue de caméra à partir de l'espace intérieur de la cabine d'ascenseur (24), lorsque le visiteur (8) est monté dans la cabine d'ascenseur (20) ;
l'émission par le dispositif d'interface (26) vers le dispositif de communication (7) de la prise de vue de caméra via le réseau de communication (30) ;
la réception par le dispositif d'interface (26) d'un deuxième signal d'entrée via le réseau de communication (30), le deuxième signal d'entrée étant généré en ce que l'hôte (2) initie au moyen d'une saisie sur le dispositif de communication (7) un déplacement de la cabine d'ascenseur (20) vers un deuxième étage (L1, L2, L3) déterminé, auquel le visiteur (8) souhaite quitter la cabine d'ascenseur (20) ;
la génération par le dispositif d'interface (26) d'un deuxième signal de commande d'ascenseur sur la base du deuxième signal d'entrée ; et
l'émission par le dispositif d'interface (26) du deuxième signal de commande d'ascenseur vers la commande d'ascenseur (10), pour initier le déplacement de la cabine d'ascenseur (20) vers le deuxième étage (L1, L2, L3) déterminé.

11. Système selon la revendication 10, dans lequel le réseau de communication (30) comprend une infrastructure pour l'informatique en nuage.

12. Système selon l'une quelconque des revendications 10 et 11, dans lequel le dispositif émetteur-récepteur (32) est équipé pour une communication par radio.

13. Système selon l'une quelconque des revendications 10 à 12, dans lequel le dispositif de communication (7) est connecté avec une installation intrinsèque au bâtiment, l'installation intrinsèque au bâtiment étant reliée avec le dispositif d'interface (26).

14. Système selon l'une quelconque des revendications 10 à 12, dans lequel le dispositif de communication (7) est un appareil mobile, qui communique via une liaison radio avec le dispositif d'interface (26).
